(19) Europäisches Patentamt / European Patent Office / Office européen des brevets

(11) **EP 3 404 856 B1**

(12) **EUROPEAN PATENT SPECIFICATION**

(45) Date of publication and mention
of the grant of the patent:
**10.04.2024  Bulletin 2024/15**

(21) Application number: **17171032.0**

(22) Date of filing: **15.05.2017**

(51) International Patent Classification (IPC):
**H04B 10/54** *(2013.01)*      **H04B 10/556** *(2013.01)*

(52) Cooperative Patent Classification (CPC):
**H04B 10/541; H04B 10/5561**

(54) **METHOD OF AND APPARATUS FOR MODULATING AN OPTICAL CARRIER**

VERFAHREN UND VORRICHTUNG ZUR MODULATION EINES OPTISCHEN TRÄGERS

PROCÉDÉ ET APPAREIL DE MODULATION D'UN SUPPORT OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.11.2018  Bulletin 2018/47**

(73) Proprietor: **Nokia Solutions and Networks Oy
02610 Espoo (FI)**

(72) Inventors:
• **SCHMALEN, Laurent
70435 Stuttgart (DE)**
• **ERIKSSON, Tobias
70435 Stuttgart (DE)**

(74) Representative: **DREISS Patentanwälte PartG
mbB
Friedrichstraße 6
70174 Stuttgart (DE)**

(56) References cited:
**EP-A1- 3 107 255        WO-A1-03/019792
US-A1- 2002 159 121    US-A1- 2009 252 501
US-B1- 7 019 882**

• **PAN CHUNPO ET AL: "Probabilistic 16-QAM
Shaping in WDM Systems", JOURNAL OF
LIGHTWAVE TECHNOLOGY, IEEE SERVICE
CENTER, NEW YORK, NY, US, vol. 34, no. 18, 15
September 2016 (2016-09-15), pages 4285-4292,
XP011621605, ISSN: 0733-8724, DOI:
10.1109/JLT.2016.2594296 [retrieved on
2016-09-02]**
• **TOBIAS FEHENBERGER ET AL: "On
Probabilistic Shaping of Quadrature Amplitude
Modulation for the Nonlinear Fiber Channel",
JOURNAL OF LIGHTWAVE TECHNOLOGY., vol.
34, no. 21, 1 November 2016 (2016-11-01), pages
5063-5073, XP055368624, US ISSN: 0733-8724,
DOI: 10.1109/JLT.2016.2594271**

EP 3 404 856 B1

**Description**

**Field of the invention**

The disclosure relates to a method of modulating a digital input stream onto an optical carrier and to an apparatus for modulating a digital input stream onto an optical carrier.

The disclosure further relates to an apparatus for decoding digital data-modulated symbols.

**Background**

Conventional methods for modulating digital input signals onto an optical carrier are e.g. used for coherent long-haul and metro fiber-optical transmission systems.

In coherent optical transmission systems, probabilistic power shaping of quadrature amplitude modulation, QAM, formats has been shown to achieve longer transmission reach as compared to conventional QAM modulation formats without such power shaping. The probabilistic power shaping can support a simpler rate adaptation than rate adaption of the forward error correction scheme.

A further conventional type of power shaping that can be applied is geometrical shaping, where the constellation points are transmitted with uniform probability, but the geometry of the constellation is instead optimized.

One of the biggest problems with probabilistic power shaping is the construction of a distribution matcher, which maps a bitstream with uniform distribution to the non-uniform constellation. Methods such as many-to-one mapping typically result in either a performance loss, necessitate costly iterative receiver processing or incur a rate loss, which both reduce the overall system gain hoped for from power shaping.

Further, conventional geometrical power shaping techniques typically require a computationally intense non-binary forward error correction (FEC) for maximum performance gains.

WO 03/019792 A1 discloses a system and method for performing quadrature amplitude modulation.

**Summary**

Various embodiments provide an improved method of modulating a digital input signal stream onto an optical carrier and an improved apparatus for modulating a digital input signal onto an optical carrier without one or more of the above-mentioned limitations.

Various embodiments of the disclosure are set out by the independent claims. The exemplary embodiments and features, if any, described in this specification, that do not fall under the scope of the independent claims, are to be interpreted as examples useful for understanding various exemplary embodiments of the disclosure.

Some embodiments feature a method of modulating an optical carrier according to a constellation of symbols to carry a digital data stream formed of first segments of a same length and second segments, said method comprising: for each one of the first segments, selecting a codeword of a constant composition (CC) code, the selected codeword having a value corresponding to a value of said one of the first segments, and for each selected codeword, modulating a sequence of the symbols of the constellation onto the optical carrier based on one or more bits of the one of the second segments, each symbol of the sequence being located from a center of the constellation at a distance defined by a value of a corresponding letter of the selected codeword, wherein the modulating produces a phase - and amplitude modulated optical carrier. This enables to provide low complexity geometric shaping. For example, optimized geometrically shaped constellations may be provided by applying the principle according to the embodiments. Moreover, fixed-to-fixed length encoding is also enabled, wherein a fixed number of bits of said digital input signal is associated with a fixed number of modulation symbols. Furthermore, the transmission scheme related to the proposed constellation according to the embodiments may be Gray coded in amplitude and phase. Herein, a constant composition code over an alphabet has the property that the number of occurrences of each letter of the alphabet is the same in each codeword of the code. Thus, different codewords of the code reorder the letter content of a word differently. As an example, a constant composition code is formed by the 3 codewords 110, 101, and 011, because each of the codewords has two occurrences of the letter "1" and one occurrence of the letter "0". This example code does not include the binary letter words 100 001, 010, 000, and 000, both because these words do not have the same number of 1's and 0's as the codeword 110. Further embodiments propose that said modulating includes determining a value of each symbol of the sequence from a corresponding letter of the selected CC codeword and a corresponding one or more bits of the one of the second segments. As an example, as each symbol of the above-mentioned sequence may be located from a center of the constellation at a distance defined by a value of a corresponding letter of the selected codeword, the radius of a constellation point corresponding to a symbol is determined by said corresponding letter of the selected codeword, and a phase of said constellation point corresponding to said symbol may be determined by said one or more bits of the one of the second segments.

According to further embodiments, the modulating includes determining a value of some of the symbols located at different distance from the center based on different numbers of bits of the one of the second segments. In other words, a phase of some of the symbols located at different distance from the center may be determined based on said bits of the one of the second segments.

According to further embodiments, each of the second segments has a same length.

Further embodiments , not part of the claimed invention, feature a multi-ring constellation comprising at least two rings with different radii, wherein each constellation point of said multi-ring constellation is characterized by a respective radius and a respective phase. As an example, according to some embodiments, said method comprises encoding the radii (i.e., encoding a sequence of bits into values of radii) of said multi-ring constellation depending on a first portion of said sequence of bits, e.g. said first segments, wherein a constant composition, CC, code is used for encoding said radii, wherein encoded radii are obtained, and encoding a second portion of said sequence of bits, e.g. said second segments, using a forward error correction, FEC, code, wherein FEC encoded bits are obtained, and determining at least one modulation symbol depending on said encoded radii and said FEC encoded bits.

According to some embodiments, a multi-ring constellation $C = \{C_1, \dots , C_M\}$ with M many constellation points is proposed, wherein $C_i = r_i \exp(j\varphi_i)$, wherein the radius $r_i$ belongs to a set of Q many radii $R = \{r_1, \dots , r_Q\}$ and the phases belong to a set of phases $P_i = \{\phi_{i,1}, \dots, \phi_{i,U_i}\}$, where the number of phases per radius $U_i$ depends on the chosen radius $r_i$, and wherein $j$ is the imaginary unit, with $j^2 = -1$.

As an example, according to some embodiments, a multi-ring constellation may be used which comprises more than two rings, e.g. $Q > 2$. However, according to further embodiments, multi-ring constellations with two rings may also be used.

Further embodiments feature grouping N many symbols of said multi-ring constellation and encoding said N many symbols with said CC code.

Further embodiments, not part of the claimed invention, feature selecting a specific one of said radii, and mapping a first number of said FEC encoded bits to phases of said multi-ring constellation which are associated with said selected radius. This way, an efficient separate coding of radii and phases may be performed, wherein for said radii said CC code may be used, and wherein said phases may be encoded using a conventional coding scheme such as said FEC scheme. Alternatively, or in addition to said FEC scheme, further code(s) may be used to encode said phases.

Advantageously, the use of the CC code enables that within a block of $N$ radii, always a constant number of bits of said digital data stream, e.g. said first segments of a same length, may be mapped to a sequence of $N$ phases, although the bit sequence that is mapped on the radii (e.g., first segments) will lead to a variable number of bits on the phases.

Advantageously, by altering at least one parameter of said CC code, probabilistic constellation shaping may be applied.

Further embodiments feature an apparatus as defined by claim 5.

Further embodiments of said apparatus are provided by claims 6, 7.

Further embodiments feature an apparatus as defined in claim 8. Said apparatus comprises: a local optical oscillator to output light; an optical demodulator to form a mixture of the output light and light of an optical carrier modulated by sequence of symbols of a constellation and to output complex digital signals for a sequence of measurements of the mixture; and a digital signal processor configured to identify a sequence of codewords of a constant composition code based on the complex digital signals and to evaluate, for each one of the codewords and based on a value of the one of the codewords, a digital data sequence carried by a segment of the sequence of symbols such that the symbols of the segment are located at distances from a center of the constellation defined by values of corresponding letters of the one of the codewords.

According to some embodiments, each evaluated digital data sequence has a subsequence of a same length, the subsequence of each evaluated digital data sequence is defined by a value of the corresponding identified one of the codewords.

Further embodiments feature a method of operating an optical receiver, not part of the claimed invention, said method comprising: providing output light by means of a local optical oscillator, an optical demodulator forming a mixture of the output light and light of an optical carrier modulated by sequence of symbols of a constellation and outputting complex digital signals for a sequence of measurements of the mixture; a digital signal processor identifying a sequence of codewords of a constant composition code based on the complex digital signals and evaluating, for each one of the codewords and based on a value of the one of the codewords, a digital data sequence carried by a segment of the sequence of symbols such that the symbols of the segment are located at distances from a center of the constellation defined by values of corresponding letters of the one of the codewords.

As an example, said symbols or modulation symbols, respectively, or generally said modulated optical carrier, may be obtained according to at least one of the claims 1 to 5.

Further embodiments, not part of the claimed invention, feature: grouping N many modulation symbols, decoding the radii of said N many modulation symbols using a decoder for said CC code, determining phase values associated with said N many modulation symbols. As a result, a particularly efficient decoding is enabled, wherein the radii of said multi-ring constellation are decoded first, for example in blocks of N many symbols each. This is possible as the radii have been coded separately using said CC code within a modulating stage. Subsequently, with the so gained knowledge of the radii, a fixed number of bits, which are associated with the respective phases, may be decoded. This procedure may also be denoted as "multi-stage" decoding.

Advantageously, according to some embodiments, not part of the claimed invention, the multi-ring constellation $C = \{C_1, ... , C_M\}$ may be designed such that the capacity of the channel is maximized. As an example, according to some embodiments, at least one of the following parameters of said multi-ring constellation $C$ may be modified to attain the aforementioned maximization of the channel capacity: the number $Q$ of rings, the number of constellation points or associated phases per radius $U_i$, the values of at least one of said radii and/or of at least one of said phases.

According to some embodiments, not part of the claimed invention, said step of determining said phase values comprises using a maximum likelihood, ML, decoder.

According to further embodiments, not part of the claimed invention, said step of determining said phase values comprises using a bit interleaved coded modulation scheme, BICM.

Further advantageous embodiments are provided by the dependent claims.

## Brief description of the figures

Further features, aspects and advantages of the illustrative embodiments are given in the following detailed description with reference to the drawings in which:

| | |
|---|---|
| Figure 1 | schematically depicts a simplified flow-chart of a method of modulating a digital signal stream onto an optical carrier according to an embodiment, |
| Figure 2A | schematically depicts a block diagram of an apparatus for modulating a digital signal stream onto an optical carrier according to an embodiment, |
| Figure 2B | schematically depicts a block diagram of an apparatus for modulating a digital signal stream onto an optical carrier according to a further embodiment, not part of the claimed invention, |
| Figure 3 | schematically depicts a constellation diagram according to an embodiment, |
| Figure 4 | schematically depicts a received constellation according to an embodiment, |
| Figure 5 | schematically depicts an example of a spectral efficiency chart according to an embodiment, |
| Figure 6 | schematically depicts a simplified flow-chart of a method of decoding a digital data modulated optical symbol stream according to an embodiment, |
| Figure 7A | schematically depicts a block diagram of an apparatus for decoding a digital data modulated symbol stream according to an embodiment, |
| Figure 7B | schematically depicts a block diagram of an apparatus for decoding a digital data modulated symbol stream according to a further embodiment, not part of the claimed invention, |
| Figure 8 | schematically depicts probability density functions used in some embodiments, part of the claimed invention, |
| Figure 9 | schematically depicts a constellation diagram with associated Gray coding used in some embodiments, not part of the claimed invention, and |
| Figure 10 | schematically depicts an optical transmission system according to an embodiment, not part of the claimed invention. |

## Description of the embodiments

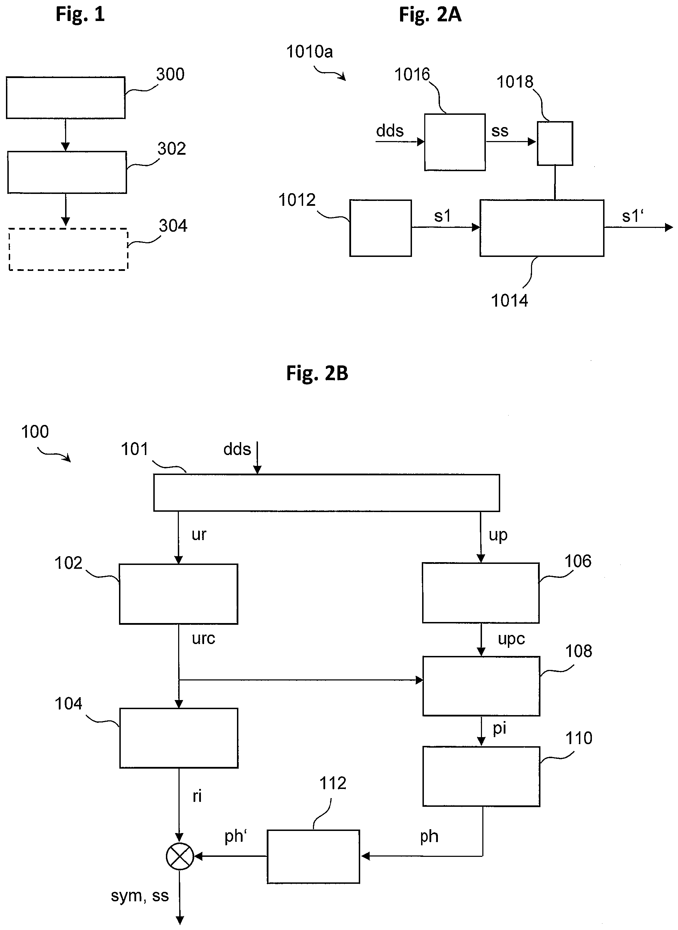

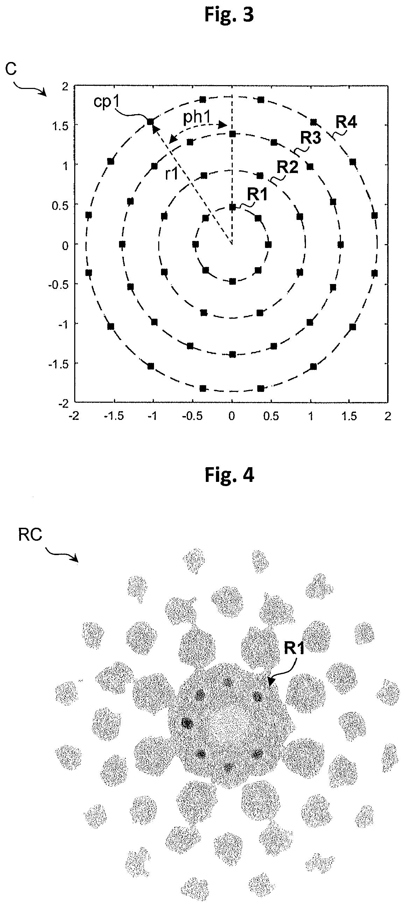

Figure 1 schematically depicts a simplified flow-chart of a method of modulating an optical carrier according to a constellation of symbols to carry a digital data stream formed of first segments of a same length and second segments according to an embodiment. The digital data stream, which may also be denoted as "digital signal", may comprise a sequence of bits, which form said first segments of same length and said second segments. A multi-ring constellation C as exemplarily depicted by Fig. 3 may be used for modulation, said multi-ring constellation C characterizing a plurality of modulation symbols that may be obtained by executing the abovementioned method of modulating .

According to the present example, said multi-ring constellation C comprises four rings R1, R2, R3, R4, on which constellation points of said constellation C are arranged, cf. the black squares arranged on said rings R1, R2, R3, R4.

In other words, the multi-ring constellation C may be denoted as a set $C = \{C_1, ... , C_M\}$ with M many constellation points only one of which is denoted with reference sign cp1 in Fig. 3 for the sake of clarity. As can be seen, said constellation point cp1 is associated with a radius r1 (corresponding to ring R4) and with a phase ph1.

Thus, each constellation point may be expressed as $C_i = r_i \exp(j\varphi_i)$, wherein the radius $r_i$ belongs to a set of $Q$ many (presently 4, according to Fig. 3) radii $R = \{r_1, ..., r_Q\}$ and the phases belong to a set of phases $P_i = \{\phi_{i,1}, ... , \phi_{i,U_i}\}$, where the number of phases per radius $U_i$ depends on the chosen radius $r_i$, and wherein $j$ is the imaginary unit, with $j^2 = -1$.

As mentioned above, Fig. 3 depicts an exemplary constellation C with $Q = 4$ rings R1, R2, R3, R4 of radii $R = \{\gamma, 2\gamma, 3\gamma, 4\gamma\}$. Presently, without loss of generality, parameter $\gamma = 0.4644$ is a suitably chosen parameter for normalization.

Also associated with said constellation C of Fig. 3 and its four rings R1, R2, R3, R4 are four sets of phases, i.e. phase values:

$$P_1 = \left\{0, \frac{\pi}{4}, \frac{\pi}{2}, \frac{3\pi}{4}, \pi, \frac{5\pi}{4}, \frac{3\pi}{2}, \frac{7\pi}{4}\right\},$$

$$P_2 = \left\{\frac{\pi}{8}, \frac{3\pi}{8}, \frac{5\pi}{8}, \frac{7\pi}{8}, \frac{9\pi}{8}, \frac{11\pi}{8}, \frac{13\pi}{8}, \frac{15\pi}{8}\right\},$$

$$P_3 = \left\{0, \frac{\pi}{8}, \frac{\pi}{4}, \frac{3\pi}{8}, \frac{\pi}{2}, \frac{5\pi}{8}, \frac{3\pi}{4}, \frac{7\pi}{8}, \pi, \frac{9\pi}{8}, \frac{5\pi}{4}, \frac{11\pi}{8}, \frac{3\pi}{2}, \frac{13\pi}{8}, \frac{7\pi}{4}, \frac{15\pi}{8}\right\},$$

$$P_4 = \left\{\frac{\pi}{16}, \frac{3\pi}{16}, \frac{5\pi}{16}, \frac{7\pi}{16}, \frac{9\pi}{16}, \frac{11\pi}{16}, \frac{13\pi}{16}, \frac{15\pi}{16}, \frac{17\pi}{16}, \frac{19\pi}{16}, \frac{21\pi}{16}, \frac{23\pi}{16}, \frac{25\pi}{16}, \frac{27\pi}{16}, \frac{29\pi}{16}, \frac{31\pi}{16}\right\},$$

wherein the first set $P_1$ of phase values comprises phase values associated with constellation points of the first ring R1, wherein the second set $P_2$ of phase values comprises phase values associated with constellation points of the second ring R2, and so on. As an example, said constellation point cp1 is associated with a radius of $4\gamma$ and with a phase of

$$\frac{3\pi}{16}$$

(assuming that the vertical dashed line indicates zero phase).

Returning to Fig. 1 and the method of modulating the digital input signal, a first step 300 comprises, for each one of the first segments, selecting a codeword of a constant composition (CC) code, the selected codeword having a value corresponding to a value of said one of the first segments.

A further step 302 (Fig. 1) comprises, for each selected codeword of said CC code, modulating a sequence of the symbols of the constellation C onto the optical carrier based on one of the second segments, each symbol of the sequence being located from a center of the constellation C at a distance defined by a value of a corresponding letter of the selected codeword.

As an example, this may also be considered as encoding the radii of said multi-ring constellation C (Fig. 3) depending on a first portion of the sequence of bits representing said digital input signal, namely on said first segments.

According to an embodiment, for encoding the radii (i.e., encoding a sequence of bits into values of radii), a block of $N$ many symbols (or constellation points, respectively) of the constellation C (Fig. 3) may be formed by grouping individual symbols, and such block may be encoded with said CC code.

According to an embodiment, a CC code $B$ of length $N$ has the property that all codewords of the code have the same type. In other words, a constant composition code over an alphabet has the property that the number of occurrences of each letter of the alphabet is the same in each codeword of the code. Thus, different codewords of the CC code reorder the letter content of a word differently.

Assuming that the CC code B is defined over an alphabet $X = \{1, 2, ..., Q\}$, then each codeword $b_i = (b_{i,1}, ..., b_{i,N}) \in B$ has the property that $|\{j \in \{1, ..., N\}: b_{i,j} = a\}| = N_a \ \forall i \in \{1, ..., |B|\}$ where $|\{\cdot\}|$ denotes the cardinality of a set and $N_a$ is a constant.

As an example, a CC code $B$ of length $N = 11$ with $|B| = 8$ codewords and $Q = 4$ is given by

$$B =$$

$$\{(1,1,1,1,1,2,2,2,3,3,4), (2,2,2,3,3,1,1,1,1,4,1), (1,1,3,2,2,1,1,3,4,1,2), (1,1,2,1,2,3,3,4,1,2,1),$$

$$(2,2,1,1,1,3,3,1,4,1,2), (1,3,1,2,3,2,4,1,2,1,1), (3,1,3,4,1,1,2,1,2,2,1), (3,3,1,1,4,1,1,2,1,2,2)\} \cdot$$

. It can be seen that $N_1 = 5$, $N_2 = 3$, $N_3 = 2$, and $N_4 = 1$, i.e., each of the 8 codewords of said code B contains exactly $N_1 = 5$ times the number "1", $N_2 = 3$ times the number "2" and so on. Note that the maximum size of the CC code is

$$|B| \leq \binom{N}{N_1, N_2, \ldots, N_Q} = \frac{N!}{N_1! \, N_2! \cdots N_Q!}$$

which is the so-called multinomial coefficient.

According to an embodiment, referring to the exemplary CC code $B$ above, $\log_2 |B| = 3$ bits (e.g., corresponding to the above-mentioned first segments of a same length) may be used to select one codeword from the codebook $|B|$ which may advantageously be used to encode $N$ many radii. The means that within a block of $N$ symbols, the radius $r_1$ is used exactly $N_1$ times, the radius $r_2$ is used exactly $N_2$ times and so on. This means that the radius $r_i$ is selected in average with probability $\frac{N_i}{N}$. Thus, according to further embodiments, by modifying the parameters $N_i$, the distribution of the proposed constellation may me changed, e.g. optimized according to a predetermined criterion, whereby probabilistic constellation shaping may be achieved in addition to the efficient encoding.

Returning to Fig. 1, according to an embodiment, the step 302 of modulating includes determining a value of each symbol of the sequence from a corresponding letter of the selected codeword and a corresponding one or more bits of the one of the second segments. As an example, if the selected codeword of the CC code is (1,1,1,1,1,2,2,2,3,3,4), the first letter is "1", and this first letter "1" together with said one or more bits of the one of the second segments of said digital data stream may be used to determining a value of a respective symbol.

According to a further embodiment, the step of modulating 302 includes determining a value of some of the symbols located at different distance from the center based on different numbers of bits of the one of the second segments.

According to a further embodiment, the step of modulating 302 produces a phase- and amplitude-modulated optical carrier, as the determination of said value of each symbol comprises both determining a radius (e.g., amplitude, for example depending on a corresponding letter of said selected codeword of the CC code) and a phase.

According to a further embodiment, each of the second segments has a same length, which, together with said first segments of a same length, enables a particularly efficient modulation.

In a further, optional, step 304 (Fig. 1), the so obtained modulated optical carrier may be transmitted via an optical transmission channel.

According to a further embodiment, based on a specific radius, which corresponds with one of said rings R1, R2, R3, R4 (Fig. 3), $|P_i|$ many bits may be mapped to the phase for said radius. Note that the number of phases (or different phase values, respectively) is not equal for each radius, however, due to the constant composition property of the CC code $B$, according to the principle of the embodiments, there will be a constant number of bits that may be mapped to the phases in a block of $N$ many symbols. In particular, according to some embodiments, the number of bits mapped to the phases in $N$ symbols may be characterized by

$$\sum_{i=1}^{Q} N_i \cdot \log_2 |P_i| \, .$$

As an example, a total number of bits mapped to each modulation symbol of a multi-ring constellation according to the embodiments may be denoted by

$$\frac{\log_2 |B| + \sum_{i=1}^{Q} N_i \log_2 |P_i|}{N} \leq \frac{\log_2 \binom{N}{N_1, N_2, \ldots, N_Q} + \sum_{i=1}^{Q} N_i \log_2 |P_i|}{N}$$

where the upper bound is given for a maximum size CC codebook.

For the example codebook as explained above and the constellation C of Fig. 3, a value of 3.5444 bits per constellation point is obtained.

Figure 4 shows an example of the received constellation RC after transmission over an AWGN (additive white Gaussian noise) channel (e.g., an optical transmission channel comprising one or more optical fibers) with an SNR (signal to noise ratio) of 18dB. It can clearly be seen that the inner-most ring R1 is used most often followed by the next ring and so on.

Figure 2A schematically depicts a block diagram of an apparatus 1010a for modulating a digital signal stream onto an optical carrier according to an embodiment.

The apparatus 1010a comprises a laser source 1012 for providing an optical carrier signal s1 and an optical modulator 1014 configured to modulate said optical carrier signal s1. At an output of said optical modulator 1014, a modulated optical output signal s1' is provided.

The apparatus 1010a further comprises a digital precoder 1016 configured to output a sequence of symbols ss (e.g., corresponding to constellation points of said constellation C, cf. Fig. 3) in response to input of a digital data stream dds having first segments of a same length and second segments, the digital precoder 1016 being configured to select a codeword of a constant composition code for each one of the first segments based on a value of the one of the first segments and being configured to output a segment of the sequence based on the selected codeword such that the symbols of the segment have distances from a center of a constellation C (Fig. 3) defined by values of corresponding letters of the selected codeword.

According to an embodiment, the output ss of the precoder 1016 is provided to an analog electrical driver 1018 which is configured to drive said optical modulator 1014 such that the optical carrier s1 is modulated to carry the sequence of symbols ss.

As an example, the apparatus 1010a may be configured to perform the method explained above with reference to Fig. 1.

According to an embodiment, the precoder 1016 is configured to output the symbols of each segment based on a corresponding one of the second segments.

According to a further embodiment, the optical modulator 1014 is configured to modulate a phase - and amplitude of the optical carrier s1.

Figure 2B schematically depicts a block diagram of an apparatus 100 for modulating a digital signal stream onto an optical carrier according to a further embodiment, not part of the claimed invention.

Figure 2B schematically depicts a block diagram of an apparatus 100 according to a further embodiment.

A digital input signal dds, which may be represented by a sequence of bits in a per se known manner, and which may e.g. represent the digital data stream dds as already explained above with reference to Fig. 2A, is split by a splitter 101 into a first portion ur and a second portion up. According to an embodiment, such splitter 101 may also be comprised in the digital precoder 1016 of Fig. 2A to provide the first and second segments mentioned above. Returning to Fig. 2B, the first portion ur of said sequence of bits is provided to a constant composition encoder 102, which encodes the radii of the multi-ring constellation C as exemplarily depicted by Fig. 3. As such, said first portion ur may e.g. correspond with the first segments of same length as mentioned above with reference to Fig. 2A.

As an example, and as already explained above, the CC encoder 102 may be configured to provide a CC code $B$ of length $N = 11$ with $|B| = 8$ codewords and $Q = 4$, which results in a codebook of eight codewords:

$$B =$$

$$\{(1,1,1,1,1,2,2,2,3,3,4), (2,2,2,3,3,1,1,1,1,4,1), (1,1,3,2,2,1,1,3,4,1,2), (1,1,2,1,2,3,3,4,1,2,1),$$

$$(2,2,1,1,1,3,3,1,4,1,2), (1,3,1,2,3,2,4,1,2,1,1), (3,1,3,4,1,1,2,1,2,2,1), (3,3,1,1,4,1,1,2,1,2,2)\}$$

.

According to an embodiment, three bits of said first portion ur may be used to select one codeword of said exemplary CC code B.

In other words, after selection of one specific codeword depending on said three bits of said first portion ur, e.g. the codeword (1,1,1,1,1,2,2,2,3,3,4) is obtained, which may be used to encode N many, presently N=11, radii, of said multi-ring constellation C (Fig. 3).

Block 104 represents a radius selection block which selects the radii urc encoded by said specific codeword. As an example, block 104 may be configured to sequentially select one of said N many radii encoded by the abovementioned specific codeword, for example in a first step a first radius "1" (which may e.g. correspond with the first ring R1, cf. Fig. 3), and in the subsequent second to fifth steps also said fist radius "1". After that, in a sixth step, a second radius "2" (which may e.g. correspond with the second ring R2, cf. Fig. 3) is selected, and so on. Finally, in the last step, a fourth radius "4" is selected. The selected radius ri is output by block 104 to a combiner or multiplier, respectively, which serves to determine a corresponding modulation symbol sym depending said selected radius ri and an assigned phase, which is determined by blocks 106, 108, 110, 112 as explained in detail below.

Block 106 is configured to encode said second portion up of said sequence of bits, by using a forward error correction, FEC, code, whereby FEC encoded bits upc are obtained at an output of block 106.

According to a preferred embodiment, said first portion ur of bits of said digital input signal is different from said second portion up of bits of said digital input signal. This has the effect that (only) the first portion ur is CC encoded by block 102, for encoding the radii of the multi-ring constellation C (Fig. 3), while (only) the second portion up is FEC encoded by block 106. The FEC encoded bits upc are used for encoding the phases as detailed in the following. In other words, according to some embodiments, the "radius bits" ur may be solely protected by the CC code, while the bits up mapped to the phases are additionally protected by an FEC code, preferably a capacity-approaching FEC code. As an example, an LDPC (Low-Density-Parity-Check) code, or a polar code or a spatially coupled LDPC code may be used by block 106.

Block 108 is configured to select $log_2|P_i|$= ld$|P_i|$ many bits of said FEC encoded bits upc, which may be mapped to different phase values for a specific selected radius, as explained above. As an example, based on the exemplarily considered codeword (1,1,1,1,1,2,2,2,3,3,4), the radius selection block 104 may select the first radius "1" of first ring R1 (Fig. 3), as the first number or element of said exemplarily considered codeword is "1". In this case, block 108 may select $log_2|P_i| = log_2|P_1| = log_2 8 = 3$ many bits pi, which can be mapped by the mapper 110 to the different phase values, cf. set $P_1$, associated with the first ring R1. As an example, a first one of said presently 3 bits pi that may be mapped to phase values of the fist ring R1, is mapped to the phase ph, e.g. with a value of zero.

This phase value ph is evaluated by block 112, which applies the exponential function exp($j \cdot$) to the phase value, so that at an output of block 112, the output phase term ph' is obtained according to: ph' = exp($j\ ph$).

This is combined by the multiplier as explained above with a respective first radius r1, so that for the first modulation symbol sym derived from the exemplarily considered codeword (1,1,1,1,1,2,2,2,3,3,4) the complex value $r$1 exp($j\ ph$) is obtained, which corresponds to one constellation point of the constellation C, which may be used to modulate said optical carrier s1 (Fig. 2A).

The further elements of the exemplarily considered codeword (1,1,1,1,1,2,2,2,3,3,4) are processed similarly, so that in total N many (presently N=11) modulation symbols sym are obtained.

After this, the next three bits of the first portion ur may be used to select a next codeword of said CC code, and the N many elements of said next codeword may be evaluated by the blocks 104, 108, 110, 112 as mentioned above to obtain further modulation symbols.

As mentioned above, referring to the exemplary CC code $B$ above, $log_2 |B|$ = 3 bits may be used to select one codeword from the codebook $|B|$, which codeword may advantageously be used to encode $N$ many radii, which means that within a block of $N$ symbols, the radius $r_1$ is used exactly $N_1$ times, the radius $r_2$ is used exactly $N_2$ times and so on.

This means that the radius r$_i$ is selected in average with probability $\dfrac{N_i}{N}$ . Advantageously, according to further embodiments, by modifying the parameters $N_i$, i.e. by modifying how often a specific radius is used within a block of N symbols, the distribution of the proposed multi-ring constellation C may me changed, e.g. optimized according to a predetermined criterion, whereby probabilistic constellation shaping may be achieved in addition to the efficient encoding.

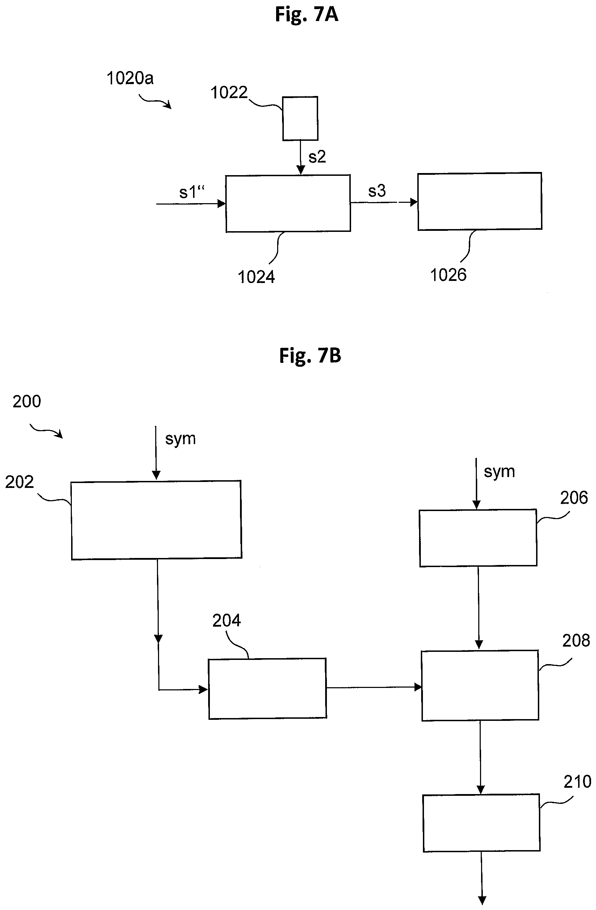

Some embodiments feature an apparatus for decoding a digital data modulated symbol stream. An exemplary embodiment is depicted by Fig. 7A. The apparatus 1020a comprises a local optical oscillator 1022 (e.g., a laser source) to output light s2, an optical demodulator 1024 to form a mixture of the output light s2 and light s1'' of an optical carrier modulated by a sequence of symbols of a constellation C (Fig. 3) and to output complex digital signals s3 for a sequence of measurements of the mixture; and a digital signal processor 1026 configured to identify a sequence of codewords of a constant composition code based on the complex digital signals s3 and to evaluate, for each one of the codewords and based on a value of the one of the codewords, a digital data sequence carried by a segment of the sequence of symbols such that the symbols of the segment are located at distances from a center of the constellation C defined by values of corresponding letters of the one of the codewords.

The apparatus 1020a may e.g. be used in an optical receiver to demodulate a modulated optical carrier s1' such as obtained according to the embodiment explained above with reference to Fig. 2A, and to decode said digital data modulated symbol stream.

According to an embodiment, each evaluated digital data sequence has a subsequence of a same length, the subsequence of each evaluated digital data sequence is defined by a value of the corresponding identified one of the codewords.

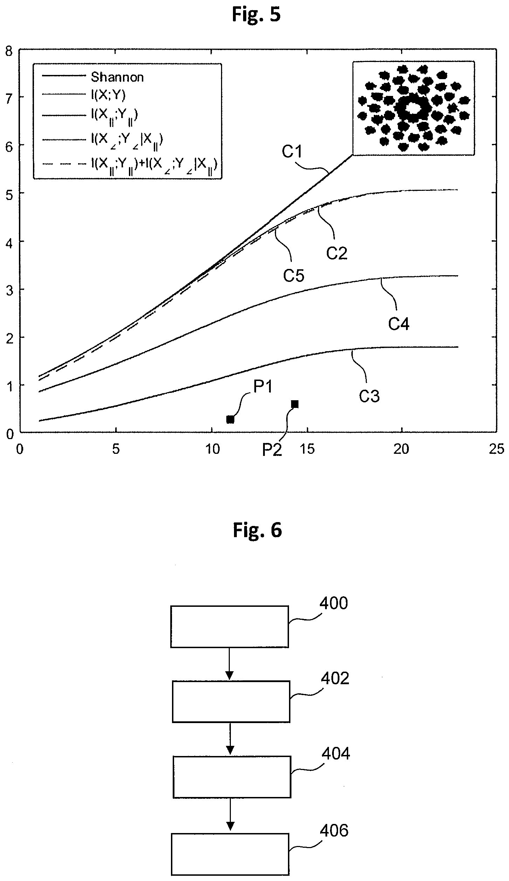

Further embodiments feature a method of operating an optical receiver, not part of the claimed invention, cf. the flow-chart of Fig. 6, said method comprising: providing 400 output light by means of a local optical oscillator 1022 (Fig. 7A), the optical demodulator 1024 forming, cf. step 402 of Fig. 6, a mixture of the output light and light of an optical carrier modulated by sequence of symbols of a constellation and outputting complex digital signals for a sequence of measurements of the mixture. In a further step 404, the digital signal processor (DSP) 1026 (Fig. 7A) identifies a sequence of codewords of a constant composition code based on the complex digital signals. In a further step 406 (Fig. 6), the DSP 1026 (Fig. 7A) evaluates, for each one of the codewords and based on a value of the one of the codewords, a digital data sequence carried by a segment of the sequence of symbols such that the symbols of the segment are located at distances from a center of the constellation defined by values of corresponding letters of the one of the codewords.

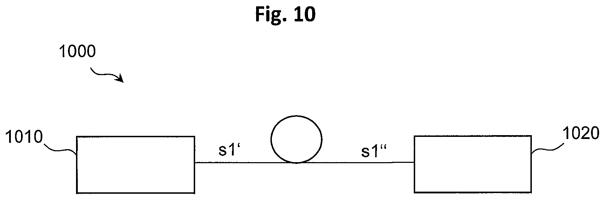

As an example, not part of the claimed invention, the above explained method of modulating an optical carrier may be performed by an optical transmitter 1010 of a coherent long-haul fiber-optical transmission system 1000 as schematically depicted by Fig. 10, and the method of decoding as explained above with reference to Fig. 6, 7A may be performed by a coherent optical receiver 1020 of said system 1000. According to an embodiment, the transmitter 1010 may comprise the apparatus 1010a of Fig. 2A explained above. As an example, the precoder 1016 may e.g. comprise a calculating unit such as a processor, a DSP or ASIC or the like. According to a further embodiment, the receiver 1020 (Fig. 10) may comprise a calculating unit such as a processor, a DSP or ASIC or the like, to perform the method of decoding. As an example, the receiver 1020 may comprise an apparatus 1020a as explained above with reference to Fig. 7A.

In the following, an apparatus 200, not part of the claimed invention, for decoding a digital data modulated symbol stream according to a further embodiment is described with reference to Fig. 7B. According to an embodiment, the decoder 200 may be considered to operate as a multi-stage decoder, as the encoder according to the embodiments may be considered as a 2-level encoder (radius and phase as two levels).

Firstly, an information theoretic analysis is provided and it is assumed that symbol "X", e.g. according to a specific constellation point of the constellation C of Fig. 3, is transmitted and symbol "Y" is received, which may be a "distorted" version of symbol X, due to noise and the like during transmission. The transmit and receive symbols X, Y can be decomposed into their radius and phase as $X = (X_{|\cdot|}, X_\angle)$, wherein $X_{|\cdot|}$ denotes the radius of symbol X, and wherein $X_\angle$ denotes the phase of symbol X. Using the chain rule of mutual information twice, it is obtained

$$I(X;Y) = I\left(X_{|\cdot|}X_\angle; Y_{|\cdot|}Y_\angle\right) = I\left(X_{|\cdot|}; Y_{|\cdot|}\right) + I\left(X_\angle; Y_\angle | X_{|\cdot|}\right) + I\left(X_{|\cdot|}; Y_\angle | Y_{|\cdot|}\right) +$$

$$I\left(X_\angle; Y_{|\cdot|} | X_{|\cdot|}Y_\angle\right),$$

where $I(X_{|\cdot|}; Y_{|\cdot|})$ is the mutual information between transmitted radius and received radius and $I(X_\angle; Y_\angle | X_{|\cdot|})$ is the mutual information between transmitted phase and received phase, provided that we know the radius that has been decoded.

According to an embodiment, the proposed multi-ring constellation C (Fig. 3) may be optimized (i.e., by modifying one or more of the values Q, $N_i$, and/or of the sets $P_i$) such that the mixed terms $I(X_{|\cdot|}; Y_\angle | Y_{|\cdot|}) + I(X_\angle; Y_{|\cdot|} | X_{|\cdot|}Y_\angle)$ are minimized. In this case, the following equation may be obtained:

$$I(X;Y) \approx I\left(X_{|\cdot|}X_\angle; Y_{|\cdot|}Y_\angle\right) = I\left(X_{|\cdot|}; Y_{|\cdot|}\right) + I\left(X_\angle; Y_\angle | X_{|\cdot|}\right) \qquad \texttt{(equation 1)}$$

Fig. 5 schematically depicts an example of a spectral efficiency chart (spectral efficiency over SNR (dB)) according to an embodiment, related to the quantities or terms, respectively, of equation (1). Curve C1 depicts the Shannon capacity, curve C2 depicts the term $I(X; Y)$, curve C3 depicts the term $I(X_{|\cdot|}; Y_{|\cdot|})$, curve C4 depicts the term $I(X_\angle; Y_\angle | X_{|\cdot|})$, and curve C5 depicts the term $I(X_{|\cdot|}; Y_{|\cdot|}) + I(X_\angle; Y_\angle | X_{|\cdot|})$.

From Fig. 5 it can be seen that indeed, $I(X; Y) \approx I(X_{|\cdot|}X_\angle; Y_{|\cdot|}Y_\angle)$ and the performance closely approaches the Shannon capacity Clover a wide range of SNRs.

The square P1 indicates the performance of the CC code B given in the example above. It can be seen that it does not approach the capacity of the radius, which could be up to ≈ 1.8 bit/symbol. This is due to the small CC codebook size of only 8 code words. Note that for the present example, no optimized CC codebook is used, but just an exemplarily selected one.

For an exemplary comparison, the further square P2 of Fig. 5 indicates the performance of another CC code of size 64 (i.e., having 64 code words), which maps 6 bits to 11 symbols. Again, an unoptimized code is used for exemplary purposes.

However, according to some embodiments, when using optimized CC codes, close-to-capacity coding may be attained. Advantageously, the principle according to the embodiments enables to approach close-to-capacity coding without requiring rather complex non-binary codes.

Figure 7B schematically depicts a simplified block diagram of an apparatus 200 for decoding a digital data modulated symbol stream , which e.g. comprises symbols sym, according to an embodiment. Said apparatus 200 is configured for: grouping N many modulation symbols sym, decoding the radii of said N many modulation symbols using a decoder 202 for said CC code, and determining phase values associated with said N many modulation symbols.

For this purpose, said N many modulation symbols sym are provided to an input of the CC decoder 202, and to an input of a block 206 which determines the argument (i.e., phase) of a modulation symbol. I.e., if a modulation symbol z is provided to block 206, it provides at its output arg(z).

According to an embodiment, the received modulation symbols are grouped into blocks of N symbols each. These are then being decoded using the decoder 202 for the CC code.

According to an embodiment, a possible decoder 202 for the CC code is a maximum likelihood (ML) decoder that selects

$$\hat{\iota} = \arg \max_{i=1,\dots,|B|} \prod_{j=1}^{N} p(|y_j| \| r_{b_{i,j}}) \quad and \quad \hat{b} = b_{\hat{\iota}}$$

i.e., the codeword $\hat{b}$ is selected that maximizes the probability $\prod_{j=1}^{N} p(|y_j| \| r_{b_{i,j}})$ where $y_j$ is the $j$ th received symbol in the block and $|y_j|$ its radius.

According to some embodiments, in AWGN channel conditions, which are dominant in optical communications, the radius follows a Ricean distribution, with

$$p(|y| \| r) = \frac{|y|}{\sigma_n^2} \exp\left(-\frac{|y|^2 + r^2}{2\sigma_n^2}\right) I_0\left(\frac{r|y|}{\sigma_n^2}\right)$$

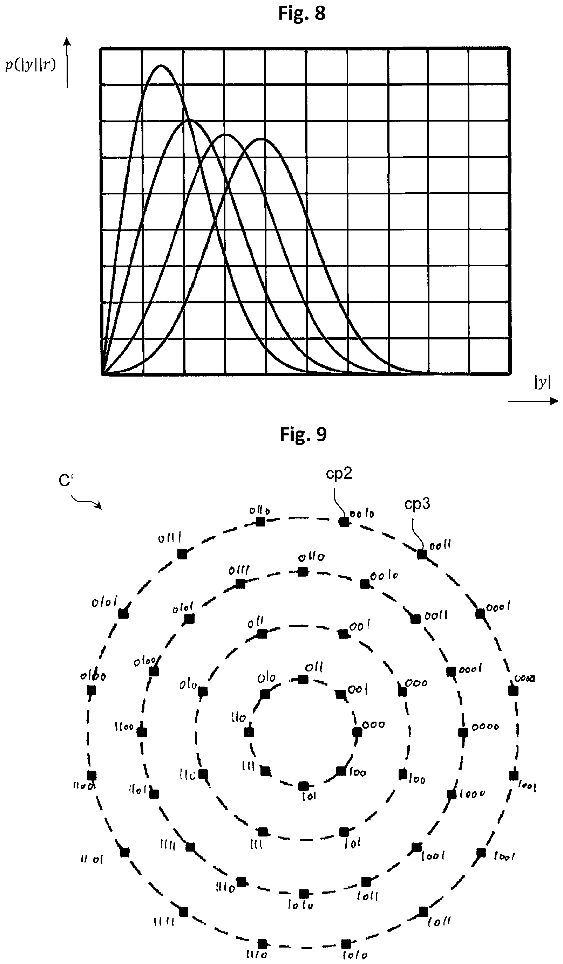

where $\sigma_n^2$ is the variance of the additive noise and $I_0(\cdot)$ is the modified Bessel function of the first kind with order 0. Figure 8 exemplarily shows the related probability density functions, PDFs, $p(|y| \| r)$ over $|y|$ for a channel with SNR 1 dB.

After the $N$ radii have been decoded by the decoder 202 (Fig. 7B), the knowledge of the codeword may be used to select the radii that are required for further decoding. According to a preferred embodiment, based on the codeword $\hat{b}$ and especially its $j$ th entry $\hat{b}_j$, the phase set $P_{\hat{b}_j}$ (e.g., one of P$_1$, P$_2$, P$_3$, P$_4$ as exemplarily explained above) is selected by selector 204 (Fig. 7B) and used in a demapper 208, which, according to an embodiment, may be a conventional demapper, to find the most likely phase that corresponds to the phase arg($y_j$) of the received symbol as provided by block 206.

Again, a ML detection technique may be used to find, according to the following equation, the estimated phase $\hat{\phi}_j$,

$$\hat{\phi}_j = \arg \max_{k=1\dots|P_{\hat{b}_j}|} p_P(\arg(y_j) | P_{\hat{b}_j,k})$$

where $P_{\hat{b}_j,k}$ is the $k$'th entry of the phase set $P_{\hat{b}_j}$. According to an embodiment, not part of the claimed invention, a probability distribution of the phase can be approximated either by a wrapped Gaussian distribution, which again, for high enough SNR is easily approximated by a Tikhonov (sometimes also called "von Mises") distribution:

$$p_P(\arg(y_j) | \phi) = \frac{\exp(\kappa \cdot \cos(\arg(y_j) - \phi))}{2\pi I_0(\kappa)}$$

where $\kappa$ is a parameter describing the circular noise component. The estimated phases can then be either mapped to bit patterns by the phase demapper 208, and then be decoded by an optional FEC decoder 210. According to an embodiment, a hard decision FEC may be performed by FEC decoder 210. According to further embodiments, the estimated phases may be used without FEC, especially if the noise is small enough.

According to a further preferred embodiment, not part of the claimed invention, a BICM (bit interleaved coded modulation)-type scheme may be used to demodulate the phases of received modulation symbols sym (Fig. 7B). Advantageously, for the proposed multi-ring constellation C (Fig. 3), in a given ring R1, R2, R3, R4, e.g. a Gray mapping can be used.

According to an embodiment, not part of the claimed invention, a Gray coded bit pattern may be assigned (preferably in each ring R1, R2, R3, R4) to the different phases, and the phases of a phase set $P_i$ may be sub-divided into different subsets $P_{i,k}^v$ which are those phases of the set $P_i$ where the bit pattern in position $k$ takes on the value $v$. Figure 9 shows an example of Gray labels assigned to each constellation point inside the circles or rings according to an embodiment.

For the example of the second circle, $P_{2,1}^0 = \left\{\frac{\pi}{8}, \frac{3\pi}{8}, \frac{5\pi}{8}, \frac{7\pi}{8}\right\}$ and $P_{2,1}^1 = \left\{\frac{9\pi}{8}, \frac{11\pi}{8}, \frac{13\pi}{8}, \frac{15\pi}{8}\right\}$ is

$$P_{2,2}^0 = \left\{\frac{\pi}{8}, \frac{3\pi}{8}, \frac{13\pi}{8}, \frac{15\pi}{8}\right\} \quad P_{2,2}^1 = \left\{\frac{5\pi}{8}, \frac{7\pi}{8}, \frac{9\pi}{8}, \frac{11\pi}{8}\right\}$$

obtained. Furthermore, and are obtained as further subsets.

As an example, a constellation point cp2 of the constellation C' is assigned the Gray code value "0010", and constellation point cp3 is assigned the Gray code value "0011".

According to an embodiment which uses Gray code, block 108 of Fig. 2B may be configured to select a group of ld|$P_j$| bits and to compare it with the bit patterns associated with the modulation symbols that correspond to the selected radius. If these correspond, then the so-determined phase is selected to form the modulation symbol.

According to an embodiment, not part of the claimed invention, log-likelihood ratios (LLR) may be determined, similar to a conventional BICM system, for a circle given by $\hat{b}_j$ as

$$L_k = \log \frac{\sum_{\phi \in P_{\hat{b}_j,k}^0} p_P(arg(y_j)|\phi)}{\sum_{\phi \in P_{\hat{b}_j,k}^1} p_P(arg(y_j)|\phi)} \quad , k = 1, \dots, \log_2 |P_{\hat{b}_j}|$$

These LLRs may then be concatenated for each j and each block of symbols and then fed to a capacity-approaching FEC decoder (e.g, an LDPC decoder, etc.), similar to a conventional BICM scheme.

The description and drawings merely illustrate the principles of the invention. It will thus be appreciated that those skilled in the art will be able to devise various arrangements that, although not explicitly described or shown herein, embody the principles of the invention, as defined by the appended claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method of modulating an optical carrier (s1) according to a constellation (C) of symbols to carry a digital data stream (dds) formed of first segments of a same length and second segments, said method comprising:

- for each one of the first segments, selecting (300) a codeword of a constant composition code, the selected codeword having a value corresponding to a value of said one of the first segments, and
- for each selected codeword, modulating (302) a sequence of the symbols of the constellation onto the optical carrier (s1) based on one or more bits of the one of the second segments, each symbol of the sequence being located from a center of the constellation (C) at a distance defined by a value of a corresponding letter of the selected codeword, wherein the modulating (302) produces a phase- and amplitude modulated optical carrier.

2. Method according to claim 1, wherein the modulating (302) includes determining a value of each symbol of the sequence from a corresponding letter of the selected codeword and a corresponding one or more bits of the one of the second segments, wherein the determination of said value of each symbol comprises both determining an amplitude and a phase.

3. Method according to one of the preceding claims, wherein the modulating (302) includes determining a value of some of the symbols located at different distance from the center of the constellation (C) based on different numbers of bits of the one of the second segments.

4. Method according to one of the preceding claims, wherein each of the second segments has a same length.

5. An apparatus (1010a), comprising: a digital precoder (1016) to output a sequence of symbols (ss) in response to input of a digital data stream (dds) having first segments of a same length and second segments, the digital precoder (1016) being configured to select a codeword of a constant composition code for each one of the first segments based on a value of the one of the first segments and being configured to output a segment of the sequence based on the selected codeword such that the symbols of the segment have distances from a center of a constellation (C) defined by values of corresponding letters of the selected codeword; and an optical modulator (1014) connected to modulate an optical carrier (s1) to carry the sequence of symbols, wherein the optical modulator (1014) is configured to modulate (302) the sequence of the symbols (ss) onto the optical carrier (s1) based on one or more bits of the one of the second segments, each symbol of the sequence being located from the center of the constellation (C) at a distance defined by a value of a corresponding letter of the selected codeword, wherein the optical modulator (1014) is configured to produce a phase- and amplitude modulated optical carrier.

6. Apparatus (1010a) according to claim 5, wherein the precoder (1016) is configured to output the symbols of each segment based on a corresponding one of the second segments.

7. Apparatus (1010a) according to at least one of the claims 5 to 6, wherein the optical modulator (1014) is configured to phase modulate the optical carrier (s1).

8. An apparatus (1020a) configured to demodulate and process a modulated optical carrier produced by the apparatus of claim 5, comprising:

- a local optical oscillator (1022) to output (400) light (s2) ;
- an optical demodulator (1024) to form (402) a mixture of the output light (s2) and light (s1") of the modulated optical carrier modulated by sequence of symbols of a constellation (C) and to output complex digital signals (s3) for a sequence of measurements of the mixture; and
- a digital signal processor (1026) configured to identify (404) a sequence of codewords of a constant composition code based on the complex digital signals (s3) and to evaluate (406), for each one of the codewords and based on a value of the one of the codewords, a digital data sequence carried by a segment of the sequence of symbols such that the symbols of the segment are located at distances from a center of the constellation (C) defined by values of corresponding letters of the one of the codewords.

9. The apparatus (1020a) according to claim 8, wherein each evaluated digital data sequence has a subsequence of a same length, the subsequence of each evaluated digital data sequence is defined by a value of the corresponding identified one of the codewords.

**Patentansprüche**

1. Verfahren zum Modulieren eines optischen Trägers (s1) gemäß einer Konstellation (C) von Symbolen zum Transportieren eines digitalen Datenstroms (dds), der aus ersten Segmenten einer selben Länge und zweiten Segmenten gebildet ist, wobei das Verfahren Folgendes umfasst:

   - für jedes der ersten Segmente Auswählen (300) eines Codeworts eines konstanten Zusammensetzungscodes, wobei das ausgewählte Codewort einen Wert aufweist, der einem Wert des einen der ersten Segmente entspricht, und
   - für jedes ausgewählte Codewort Modulieren (302) einer Sequenz der Symbole der Konstellation auf Basis von einem oder mehreren Bits des einen der zweiten Segmente auf den optischen Träger (s1), wobei sich jedes Symbol der Sequenz von einer Mitte der Konstellation (C) in einem Abstand befindet, der durch einen Wert eines entsprechenden Buchstabens des ausgewählten Codeworts definiert ist, wobei das Modulieren (302) einen phasen- und amplitudenmodulierten optischen Träger produziert.

2. Verfahren nach Anspruch 1, wobei das Modulieren (302) das Bestimmen eines Wertes jedes Symbols der Sequenz anhand eines entsprechenden Buchstabens des ausgewählten Codeworts und von einem oder mehreren entsprechenden Bits des einen der zweiten Segmente beinhaltet, wobei die Bestimmung des Wertes jedes Symbols das Bestimmen sowohl einer Amplitude als auch einer Phase umfasst.

3. Verfahren nach einem der vorhergehenden Ansprüche, wobei das Modulieren (302) das Bestimmen eines Wertes von einigen der Symbole, die sich in einem verschiedenen Abstand von der Mitte der Konstellation (C) befinden, auf Basis von verschiedenen Anzahlen von Bits des einen der zweiten Segmente beinhaltet.

4. Verfahren nach einem der vorhergehenden Ansprüche, wobei jedes der zweiten Segmente eine selbe Länge aufweist.

5. Vorrichtung (1010a), die Folgendes umfasst: einen digitalen Vorcodierer (1016) zum Ausgeben einer Sequenz von Symbolen (ss) in Reaktion auf das Eingeben eines digitalen Datenstroms (dds), der erste Segmente einer selben Länge und zweite Segmente aufweist, wobei der digitale Vorcodierer (1016) dazu ausgelegt ist, ein Codewort eines konstanten Zusammensetzungscodes für jedes der ersten Segmente auf Basis eines Wertes des einen der ersten Segmente auszuwählen, und dazu ausgelegt ist, ein Segment der Sequenz auf Basis des ausgewählten Codeworts auszugeben, derart, dass die Symbole des Segments Abstände von einer Mitte einer Konstellation (C) aufweisen, die durch Werte von entsprechenden Buchstaben des ausgewählten Codeworts definiert sind; und einen optischen Modulator (1014), der verbunden ist, um einen optischen Träger (s1) zum Transportieren der Sequenz von Symbolen zu modulieren, wobei der optische Modulator (1014) dazu ausgelegt ist, die Sequenz von Symbolen (ss) auf Basis von einem oder mehreren Bits des einen der zweiten Segmente auf den optischen Träger (s1) zu modulieren (302), wobei sich jedes Symbol der Sequenz von der Mitte der Konstellation (C) in einem Abstand befindet, der durch einen Wert eines entsprechenden Buchstabens des ausgewählten Codeworts definiert ist, wobei der optische Modulator (1014) dazu ausgelegt ist, einen phasen- und amplitudenmodulierten optischen Träger zu produzieren.

6. Vorrichtung (1010a) nach Anspruch 5, wobei der Vorcodierer (1016) dazu ausgelegt ist, die Symbole jedes Segments auf Basis eines entsprechenden der zweiten Segmente auszugeben.

7. Vorrichtung (1010a) nach mindestens einem der Ansprüche 5 bis 6, wobei der optische Modulator (1014) dazu ausgelegt ist, den optischen Träger (s1) phasenzumodulieren.

8. Vorrichtung (1020a), die dazu ausgelegt ist, einen modulierten optischen Träger, der von der Vorrichtung von Anspruch 5 produziert wurde, zu demodulieren und zu verarbeiten, und Folgendes umfasst:

   - einen lokalen optischen Oszillator (1022) zum Ausgeben (400) von Licht (s2);
   - einen optischen Demodulator (1024) zum Bilden (402) einer Mischung des ausgegebenen Lichts (s2) und von Licht (s1") des modulierten optischen Trägers, der von einer Sequenz von Symbolen einer Konstellation (C) moduliert ist, und Ausgeben von komplexen digitalen Signalen (s3) für eine Sequenz von Messungen der Mischung; und
   - einen digitalen Signalprozessor (1026), der dazu ausgelegt ist, eine Sequenz von Codewörtern eines konstanten Zusammensetzungscodes auf Basis der komplexen digitalen Signale (s3) zu identifizieren (404) und für jedes der Codewörter auf Basis eines Wertes des einen der Codewörter eine digitale Datensequenz zu beurteilen (406), die von einem Segment der Sequenz von Symbolen transportiert wird, derart, dass sich die Symbole des Segments in Abständen von einer Mitte der Konstellation (C) befinden, die durch Werte von entsprechenden Buchstaben des einen der Codewörter definiert sind.

9. Vorrichtung (1020a) nach Anspruch 8, wobei jede beurteilte digitale Datensequenz eine Untersequenz einer selben Länge ist, die Untersequenz von jeder beurteilten digitalen Datensequenz durch einen Wert des entsprechenden identifizierten einen der Codewörter definiert ist.

**Revendications**

1. Procédé de modulation d'une porteuse optique (s1) selon une constellation (C) de symboles pour transporter un flux de données numériques (dds) formé de premiers segments d'une même longueur et de deuxièmes segments, ledit procédé comprenant :

   - pour chacun des premiers segments, la sélection (300) d'un mot de code d'un code à composition constante, le mot de code sélectionné ayant une valeur correspondant à une valeur dudit un des premiers segments, et
   - pour chaque mot de code sélectionné, la modulation (302) d'une séquence de symboles de la constellation sur la porteuse optique (s1) sur la base d'un ou plusieurs bits de ce segment des deuxièmes segments, chaque symbole de la séquence se situant à une distance d'un centre de la constellation (C) qui est définie par une valeur d'une lettre correspondante du mot de code sélectionné, dans lequel la modulation (302) produit une porteuse optique modulée en phase et en amplitude.

2. Procédé selon la revendication 1, dans lequel la modulation (302) comporte la détermination d'une valeur de chaque symbole de la séquence à partir d'une lettre correspondante du mot de code sélectionné et d'un ou plusieurs bits correspondants de ce segment des deuxièmes segments, dans lequel la détermination de ladite valeur de chaque symbole comprend la détermination à la fois d'une amplitude et d'une phase.

3. Procédé selon l'une des revendications précédentes, dans lequel la modulation (302) comporte la détermination d'une valeur de certains des symboles situés à différentes distances du centre de la constellation (C) sur la base de différents nombres de bits de ce segment des deuxièmes segments.

4. Procédé selon l'une des revendications précédentes, dans lequel chacun des deuxièmes segments a une même longueur.

5. Appareil (1010a), comprenant : un précodeur numérique (1016) pour délivrer une séquence de symboles (ss) en réponse à l'entrée d'un flux de données numériques (dds) ayant des premiers segments d'une même longueur et des deuxièmes segments, le précodeur numérique (1016) étant configuré pour sélectionner un mot de code d'un code à composition constante pour chacun des premiers segments sur la base d'une valeur de ce segment des premiers segments, et étant configuré pour délivrer un segment de la séquence sur la base du mot de code sélectionné, de sorte que les symboles du segment soient à des distances d'un centre d'une constellation (C) qui sont définies par des valeurs de lettres correspondantes du mot de code sélectionné ; et un modulateur optique (1014) connecté pour moduler une porteuse optique (s1) pour transporter la séquence de symboles, dans lequel le modulateur optique (1014) est configuré pour moduler (302) la séquence de symboles (ss) sur la porteuse optique (s1) sur la base d'un ou plusieurs bits de ce segment des deuxièmes segments, chaque symbole de la séquence se situant à une distance du centre de la constellation (C) qui est définie par une valeur d'une lettre correspondante du mot de code sélectionné, dans lequel le modulateur optique (1014) est configuré pour produire une porteuse optique modulée en phase et en amplitude.

6. Appareil (1010a) selon la revendication 5, dans lequel le précodeur (1016) est configuré pour délivrer les symboles de chaque segment sur la base d'un segment correspondant des deuxièmes segments.

7. Appareil (1010a) selon au moins une des revendications 5 et 6, dans lequel le modulateur optique (1014) est configuré pour moduler en phase la porteuse optique (s1).

8. Appareil (1020a) configuré pour démoduler et traiter une porteuse optique modulée produite par l'appareil de la revendication 5, comprenant :

- un oscillateur optique local (1022) pour émettre (400) de la lumière (s2) ;
- un démodulateur optique (1024) pour former (402) un mélange de la lumière (s2) de sortie et d'une lumière (s1") de la porteuse optique modulée, modulée par une séquence de symboles d'une constellation (C), et pour émettre des signaux numériques complexes (s3) pour une séquence de mesures du mélange ; et
- un processeur de signaux numériques (1026) configuré pour identifier (404) une séquence de mots de code d'un code à composition constante sur la base des signaux numériques complexes (s3), et pour évaluer (406), pour chacun des mots de code et sur la base d'une valeur de ce mot de code des mots de code, une séquence de données numérique transportée par un segment de la séquence de symboles, de sorte que les symboles du segment soient situés à des distances d'un centre de la constellation (C) qui sont définies par des valeurs de lettres correspondantes de ce mot de code des mots de code.

9. Appareil (1020a) selon la revendication 8, dans lequel chaque séquence de données numériques évaluée a une sous-séquence d'une même longueur, la sous-séquence de chaque séquence de données numériques évaluée étant définie par une valeur du mot de code identifié correspondant des mots de code.

# Fig. 1

# Fig. 2A

# Fig. 2B

**Fig. 3**

**Fig. 4**

## Fig. 5

## Fig. 6

**Fig. 7A**

1020a

1022

s2

s1"

1024

s3

1026

**Fig. 7B**

200

sym

202

sym

206

204

208

210

## Fig. 8

## Fig. 9

EP 3 404 856 B1

**Fig. 10**

1000

1010

s1'

s1"

1020

21

**EP 3 404 856 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03019792 A1